# EUROPEAN PATENT APPLICATION

(11) **EP 4 283 548 A1**
(43) Date of publication of application: **29.11.2023**
(21) Application number: 22175893.1
(22) Date of filing: 27.05.2022
(51) Int. Cl.: G06Q 20/36, H04L 9/08, G06F 21/31, G06Q 20/40, G06Q 20/06

(54) **WALLET CONFIGURED TO BE RECOVERED DEPENDING ON A USER BEHAVIOUR**

(71) Applicant: Siemens Aktiengesellschaft, 80333 München (DE)
(72) Inventor: Singh, Saurabh Narayan, 81739 München (DE); Sauer, Markus, 81739 München (DE)
(74) Representative: Siemens Patent Attorneys

(57) **Abstract**

The disclosure relates to a wallet (1) for a distributed ledger-based asset, wherein the wallet (1) belongs to an owner (2), wherein the wallet (1) is configured to be recovered (3) depending on a user behaviour (21), wherein the user behaviour (21) is a characteristic way in which the owner (2) acts, especially in response to a particular situation and/or a stimulus.

The disclosure further relates to a distributed ledger system, a method for creation of a wallet, and a use of a wallet (1) to recover (3) itself.

## Description

### Field of the Invention

The embodiments disclosed herein relate to a wallet for a distributed ledger-based asset, a distributed ledger system, a method for creation of a wallet, and a use of a wallet to recover itself.

### Background of the Invention

Wallets are one of the most important aspects for distributed crypto-technology-based applications, especially distributed leger-based assets, especially blockchain related applications. Wallets contain the identity of the owner and serve as a basis for authenticating the user for transactions.

It is even more important to consider the security of the wallet when it comes to cryptocurrency based blockchain like Ethereum and bitcoin or especially when it comes to token ecosystems where a cryptographic token for instance represents a physical or virtual (especially NFT) asset of value. The entire value of cryptocurrency can only be accessed by the identity stored in the wallet.

Since it is a high-risk system, the security of the wallets has been designed to be very fool proof, in general with only password mechanism integrated.

Concerning access control, wallets can be divided into two categories, custodial wallets, and non-custodial wallets.

Custodial wallets store a public-private key pair at a secure server and the user can access them via secure state of the art identity management systems. This is equivalent to a centralized solution. Here identity recovery is simple. A custodian can reset a password based on standard practices. This solution, however, is not decentralized, and control over the wallet rests in the hand of the custodian. The entire worth of assets being controlled by an entity which is itself prone to hacking, security issues, human failure and other forms of losses that could be triggered by hardware or system failure are issues causing custodial wallets not being the norm.

Non-custodial wallets are the norm. Non-custodial wallets store the identity at an owner's device and the owner can store the password in a secure location, especially an USB memory, a virtual machine and/or a piece of paper. In case user forgets the password, there is no way to retrieve the identity and access the blockchain based assets without recovery of the wallet. For recovery, non-custodial wallets usually also provide a pass phrase which can be used for wallet recovery. This pass phrase contains a combination of random words which need to be memorized and entered when recovery is wished. These pass phrases suffer with the same issue. If the user forgets the pass phrase, there is no way to recover the wallet again and therefore to retrieve the identity and access the blockchain based assets.

The password and/or a random salt are used to create a private-public key pair. The random salt it is based on a random salt which is generated either randomly, in form of a string at the time of creation of the keypair, or by some other means like asking user to draw an image or a few lines. The intention behind this is to create a source of randomness which can never be replicated. In case user forgets the associated salt used to generate the public-private key pair, there is no way to retrieve the identity and access the blockchain based assets or recover the wallet again.

In the past, this has been shown to be a great challenge in various hacks where wallets were locked by mistake and then millions of dollars' worth of assets were locked and remained inaccessible.

Although there is no way to retrieve the lost assets, it is pertinent that the future design of such wallets should have a way to retrieve the identity of the user without compromising the security promises that come with the present-day wallets and identity solutions. This becomes even more important when we consider the permeability of blockchain in industrial applications today. Unlike bitcoin and ethers, losing identity in a business application can have even more grave consequences. The irrecoverable nature of wallets stem from the basic design of introducing unique randomness to generate public private key pair. To make the wallet secure, these randomness generators emphasize on not being replicated by anyone. But this leads to the fact that in case the password is forgotten, the only way user has is to remember the key phrase that was used as the source of randomness.

Accordingly, there is a need for a solution to overcome this challenge and provide a solution for a secure access to a distributed leger-based asset.

### Summary

Embodiments herein generally relate to a wallet for a distributed ledger-based asset. Wherein the wallet belongs to an owner, wherein the wallet is configured to be recovered depending on a user behaviour, wherein the user behaviour is a characteristic way in which the owner, e.g., user, acts, especially in response to a particular situation and/or a stimulus.

The user behaviour is a user characteristic which describes how actions are performed by the user and/or in which manner.

The user behaviour does not describe the content of action nor what is performed. E.g., the user behaviour describes how fast an input is made, but not which input is made.

According to the embodiments a wallet which has a unique randomness generator based on the user behavior which can help user retrieve the identity from the wallet in case password is forgotten is suggested.

The intention of using user behavior is to create a source of randomness which can never be replicated. The proposed mechanism is unique to the user but unlike other mentioned techniques, this can be replicated by the user later without having to remember a bunch of dictionary strings or images as in state-of-the-art techniques.

In a further embodiment the wallet is linked to data based on the user behaviour, wherein the data based on the user behaviour comprises data based on a previous user behaviour of the owner. The previous user behaviour is monitored to gather data based on the previous user behaviour or to gather raw data or unprocessed data as basis for the data based on the previous user behaviour. The data based on the user behaviour has the advantage that it provides a way to store the previous user behaviour. Same applies to the data based on a current user behaviour introduced below.

In a further embodiment the wallet is configured to be recovered depending on a match value between the data based on the previous user behaviour and data based on a current user behaviour. The current user behaviour might be the behaviour of the actual owner, it might however also be a user behaviour of someone who wants to gain unauthorized access to the wallet. The match value has the advantage that the recovery of the wallet is depending on the match and how close the current user behaviour is to the previous user behaviour. Match values smaller than 100 percent have the advantage that a recovery is also possible if the user behaviour changes over time. Match values close to 100 percent have the advantage that the provide a higher security level.

In a further embodiment the wallet is configured to be recovered depending on an amount of time the data based on a current user behaviour is based on. Using a minimum amount of time for the data based on the current user behaviour has the advantage that a higher security level can be reached with a higher amount of time.

In a further embodiment the data based on the previous user behaviour is updated event based and/or cyclic. This has the advantage that a more recent previous user behaviour is used for the recovery of the wallet and the other embodiments. An event is especially a specific action or a command. Cyclic is especially regular, periodic, at defined time cycle, or similar.

In a further embodiment the data based on the previous user behaviour comprises a cryptographic protection. This has the advantage that the data based on the previous user behaviour is protected against unauthorized changes. This has the advantage that a recovery is always based on the previous user behaviour of the actual owner. The cryptographic protection is especially a public-private keypair.

In a further embodiment the cryptographic protection is created based on the previous user behaviour as a source of randomness, especially for creation of a cryptographic key.

In a further embodiment the user behaviour include:
- an online browsing behaviour, and/or
- an amount of time spent on certain applications, and/or
- a spending habit, and/or
- a social circle, and/or
- a social network profile, and/or
- a preferred kind of movies and/or songs.

As mentioned before, the user behaviour is a user characteristic which describes how actions are performed by the user and/or in which manner. Based on this unique information, the data based on the previous user behaviour, which also can include a specific user profile, is created. In current times, various aspects of user behaviour are tracked and monitored by different entities (monitoring entity) to create a unique user profile or data based on the previous user behaviour.

Based on different state-of-the-art research results, multiple ways are known to provide a unique user identification based on observing user behaviour. Any source of such uniqueness can be used to create the first salt and later to identify the user. User can even access this data by requesting various websites and service provider and have access to the entire behaviour history.

In a further embodiment the data based on the previous user behaviour is configured to be created by a classification algorithm. This means that the data based on the previous user behaviour and the unique user profile is created by a classification algorithm. Same also applies to the data based on the current user behaviour.

In a further embodiment the invention includes a distributed ledger system, especially a blockchain, comprising at least one wallet according to the previous description.

In a further embodiment the invention includes a method for creation of a wallet for a distributed leger-based asset, comprising the steps:
- Assigning of owner data of an owner, especially an owner ID, to the wallet,
- assigning of a user behaviour to the wallet,
wherein the user behaviour is a characteristic way in which the owner, e.g., user, acts, especially in response to a particular situation and/or a stimulus, and
- configuring of the wallet to be recovered depending on the user behaviour.

In a further embodiment the user behaviour is monitored by a monitoring entity. The monitoring entity is the metadata source for the previous and the current user behaviour and the data based on the previous and the current user behaviour.

In a further embodiment the method comprises the additional step of classifying the user behaviour by a classification algorithm. This means that the data based on the previous user behaviour and the unique user profile is created by a classification algorithm. Same also applies to the data based on the current user behaviour.

In a further embodiment the invention includes a use of a wallet according to previous description to recover itself, comprising the steps:
- Receiving of data based on the user behaviour, and
- recovering of the wallet depending on the data based on the user behaviour. Recovering includes especially unlocking the wallet and resetting the password.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

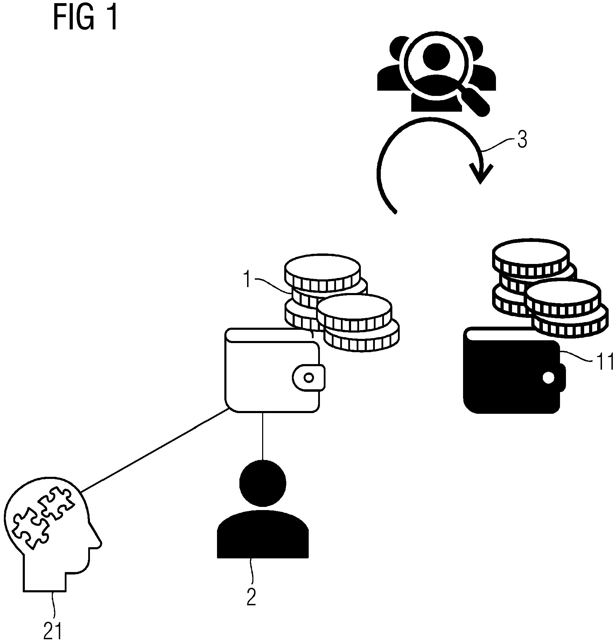

- Fig. 1: shows a schematic diagram of a setup according to the invention.

### Detailed Description of the Drawings

Fig. 1 shows a wallet 1 for a distributed ledger-based asset, wherein the wallet 1 belongs to an owner 2, wherein the wallet 1 is configured to be recovered 3 depending on a user behaviour 21, wherein the user behaviour 21 is a characteristic way in which the owner 2 acts, especially in response to a particular situation and/or a stimulus. During recovery a recovered wallet 11 is created.

A method for creation of a wallet 1 for a distributed leger-based asset comprises the steps:
- Assigning of owner data of an owner 2 to the wallet 1,
- assigning of a user behaviour 21 to the wallet 1,
wherein the user behaviour 21 is a characteristic way in which the owner 2 acts, especially in response to a particular situation and/or a stimulus, and
- configuring of the wallet 1 to be recovered 3 depending on the user behaviour 21, while a recovered wallet 11 is created.

A use of a wallet 1 to recover itself, comprises the steps:
- Receiving of data based on the user behaviour 21, and
- recovering 3 of the wallet 1 into a recovered wallet 11 depending on the data based on the user behaviour 21.

Although the invention has been explained in relation to its advantageous embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Wallet (1) for a distributed ledger-based asset,
wherein the wallet (1) belongs to an owner (2),
wherein the wallet (1) is configured to be recovered (3) depending on a user behaviour (21),
wherein the user behaviour (21) is a characteristic way in which the owner (2) acts, especially in response to a particular situation and/or a stimulus.

2. Wallet (1) according to claim 1, wherein the wallet (1) is linked to data based on the user behaviour (21), wherein the data based on the user behaviour (21) comprises data based on a previous user behaviour of the owner (2).

3. Wallet (1) according to claim 2, wherein the wallet (1) is configured to be recovered (3) depending on:
- a match value between the data based on the previous user behaviour and data based on a current user behaviour.

4. Wallet (1) according to claim 3, wherein the wallet (1) is configured to be recovered (3) depending on:
- an amount of time the data based on a current user behaviour is based on.

5. Wallet (1) according to one of the claims 2 to 4, wherein the data based on the previous user behaviour is updated event based and/or cyclic.

6. Wallet (1) according to one of the claims 2 to 5, wherein the data based on the previous user behaviour comprises a cryptographic protection.

7. Wallet (1) according to claim 6, the cryptographic protection is created based on the previous user behaviour as a source of randomness.

8. Wallet (1) according to one of the previous claims, wherein the user behaviour (21) include:
- an online browsing behaviour, and/or
- an amount of time spent on certain applications, and/or
- a spending habit, and/or
- a social circle, and/or
- a social network profile, and/or
- a preferred kind of movies and/or songs.

9. Wallet (1) according to one of the claims 2 to 8, wherein the data based on the previous user behaviour is configured to be created by a classification algorithm.

10. Distributed ledger system comprising at least one wallet (1) according to one of the claims 1 to 9.

11. Method for creation of a wallet (1) for a distributed leger-based asset, comprising the steps:
- Assigning of owner data of an owner (2) to the wallet (1),
- assigning of a user behaviour (21) to the wallet (1),
wherein the user behaviour (21) is a characteristic way in which the owner (2) acts, especially in response to a particular situation and/or a stimulus, and
- configuring of the wallet (1) to be recovered (3) depending on the user behaviour (21).

12. Method according to claim 11, wherein the user behaviour (21) is monitored by a monitoring entity.

13. Method according to claim 11 or 12, Comprising the additional step:
- Classifying the user behaviour (21) by a classification algorithm.

14. Use of a wallet (1) according to one of the claims 1 to 10 to recover (3) itself, comprising the steps:
- Receiving of data based on the user behaviour (21), and
- recovering (3) of the wallet (1, 11) depending on the data based on the user behaviour (21).
